# EUROPEAN PATENT SPECIFICATION

(11) **EP 2 075 804 B1**
(45) Date of publication and mention of the grant of the patent: **03.06.2015**
(21) Application number: 08162830.7
(22) Date of filing: 22.08.2008
(51) Int. Cl.: H01F 5/04, H01F 7/06, H01F 27/04, H01R 13/66

(54) **Structure for drawing out lead wires from a coil device**
Struktur zur Herausführung von Führungsdrähten aus einer Spulenvorrichtung
Structure pour faire sortir des fils conducteurs d'un dispositif de bobine

(30) Priority: 25.12.2007 JP 2007331348
(43) Date of publication of application: 01.07.2009
(73) Proprietor: Fujikoki Corporation, Tokyo 158-0082 (JP)
(72) Inventor: Koyatsu, Kaoru, Tokyo Tokyo 158-0082 (JP)
(74) Representative: Isarpatent

(56) References cited:
- JP-A- 2000 306 739
- JP-A- 2005 291 266
- US-A- 4 683 454

## Description

### BACKGROUND

### 1. Field of the Invention

The present invention relates to a structure for drawing out lead wires from a coil device, which is used for energizing a coil winding wound around a coil bobbin, such as an electromagnetic coil device or the like.

### 2. Description of the Related Art

A conventional electromagnetic valve described in Japanese patent publication No.2005-291266 gazette, as shown in Fig. 9, a coil device 65 of a stepping motor 60 for driving the electromagnetic valve is composed of: a coil bobbin 61; a coil 62 wound around the coil bobbin 61; a terminal pin 63 to which an end of the coil 62 is connected; and a resin mold portion 64 resin-molding the coil bobbin 61, the coil 62 and the terminal pin 63 except for a tip portion of the terminal pin 63. In addition, in order to draw a lead from the coil device 65, a driving IC or the like is arranged on a wiring board 67, and an exposed conductor portion 68a of a lead 68 is inserted into a reception hole of the wiring board 67 and is soldered to a conductive pattern on the wiring board 67.

In the above-mentioned construction, after the exposed conductor portion 68a of the lead 68 is inserted into the reception hole of the wiring board 67, the exposed conductor portion 68a is directly be soldered to the conductive pattern. Before the soldering, the exposed conductor portion 68a is required to be subject to preliminary soldering, which causes the portion subject to preliminary soldering to be hardened and resiliency of the portion to be lost. Therefore, after the exposed conductor portion 68a is soldered to the conductive pattern of the wiring board 67, a load to the lead 68 may break the portion of the exposed conductor portion 68a subject to preliminary soldering, and there is a problem that uneasiness remains in respect of strength.

A structure, according to the preamble of claim 1, is known from US-A-4683.454.

### SUMMARY OF THE INVENTION

The present invention has been achieved in consideration of the above problems in the conventional art, and the object thereof is to prevent the exposed conductor portion from breaking and to maintain the connection state between the lead and the wiring board when a load is added to the lead wires under the condition that the lead wires of the coil device are connected to and retained on the wiring board.

To achieve the above object, the present invention relates to a structure according to claim 1, for drawing out lead wires from a coil device having a coil and a plurality of terminal pins to which ends of the coil are connected. According to this structure an end of the lead wires is connected to a connector, the connector is connected at a side face thereof to the wiring board for relay, and thus the wiring board is connected to the terminal pins.

According to the structure of the present invention, since ends of lead wires are connected to a connector, and the lead wires are connected to a wiring board for relay via the connector, exposed conductor portions of the lead wires are not subject to preliminary soldering. As a result, when a mechanical load is applied to the lead wires from outside, the breakage of the exposed conductor portion can be prevented, and the connection state between the lead wires and the coil is maintained in stable.

In the structure for drawing out lead wires from a coil device described above, connection terminals of the connector which are connected to the wiring board project in a direction perpendicular to a direction that the lead wire extends. Therefore, the connection state between the lead wires and the wiring board is stably maintained.

In the above-mentioned structure for drawing out lead wires from the coil device, the coil device is a resin-molded type in which an outer periphery of the coil is resin-molded except for tip portions of the terminal pins, and comprises a cover for covering the connector to which the lead wires are connected, the wiring board and the terminal pins connected to the resin-molded coil device, and the inner space of the cover is filled with resin. By this structure, the wiring board is stably retained in the cover, which allows the lead wires also to be stably retained in the cover.

In the structure for drawing out lead wires of a coil device for drawing lead wires from terminal pins of a coil device having a coil and a plurality of terminal pins to which ends of the coil are connected. The ends of the lead wires are connected to crimp terminals; the crimp terminals are connected at a side face thereof to a wiring board for relay; and the wiring board is connected to the terminal pins. According to the present invention, since ends of lead wires are connected to crimp terminals, and the lead wires are connected to a wiring board for relay via the crimp terminals, exposed conductor portions of the lead wires are not subject to preliminary soldering. As a result, when mechanical load is added to the lead wires from outside, the breakage of the exposed conductor portions can be prevented, and the connection state between the lead wires and the coil is stably maintained.

In the above-mentioned structure for drawing out lead wires of the coil device, connection terminals of the crimp terminals to be connected to the wiring board may project in a direction perpendicular to a direction that the lead extends. By this construction, the connection state between the lead wires and the wiring board is stably maintained.

As described above, according to the present invention, when a load is added to lead wires under the condition that the lead wires of a coil device are connected to and retained on a wiring board, it becomes possible to prevent exposed conductor portions of the lead wires from breaking and to maintain the connection state between the lead wires and the wiring board.

### BRIEF DESCRIPTION OF THE DRAWINGS

The present invention will be more apparent from the detailed description with reference to the drawings, wherein:
Figures 1A to 1E show a connector constituting a structure for drawing out lead wires from the coil device according to the present invention, in which 1A is a front view, 1B a top view, 1C a rear elevational view, 1D a side view, and 1E a cross-sectional view of 1A taken along the line A-A;
Figures 2A to 2C show a crimp terminal constituting the connector shown in Figs. 1A to 1E, in which 2A is a front view, 2B a side view, and 2C a top view;
Figures 3A to 3F show a housing constituting the connector shown in Figs. 1A to 1E, in which 3A is a front view, 3B a top view, 3C a rear elevational view, 3D a side view, 3E a cross-sectional view of 3A taken along the line B-B, and 3F a bottom view;
Figures 4A to 4C show a cover constituting a structure for drawing out lead wires from the coil device according to the present invention, in which 4A is a top view, 4B a cross-sectional view of 4A taken along the line C-C, and 4C a bottom view;
Figures 5A to 5C show a state that the crimp terminal shown in Figs. 2A to 2C is attached to a lead wire, in which 5A is a front view, 5B a side view, and 5C a top view;
Figures 6A and 6B are drawings for explaining a method of assembling a stepping motor with the structure for drawing out lead wires from the coil device according to the present invention, in which 6A is an exploded perspective view, and 6B a perspective view showing the assembly.
Figures 7A and 7B show a stepping motor with the structure for drawing out lead wires from the coil device according to the present invention, in which 7A is a cross-sectional view, and 7B a view of 7A observed from the arrow D;
Figure 8 is a cross-sectional view showing a stepping motor with a structure not according to the invention, for drawing out lead wires from the coil device with an embodiment without a connector.
Figure 9 is a cross-sectional view showing a stepping motor with a conventional structure for drawing out lead wires from the coil device.

### THE BEST MODE TO CARRY OUT THE INVENTION

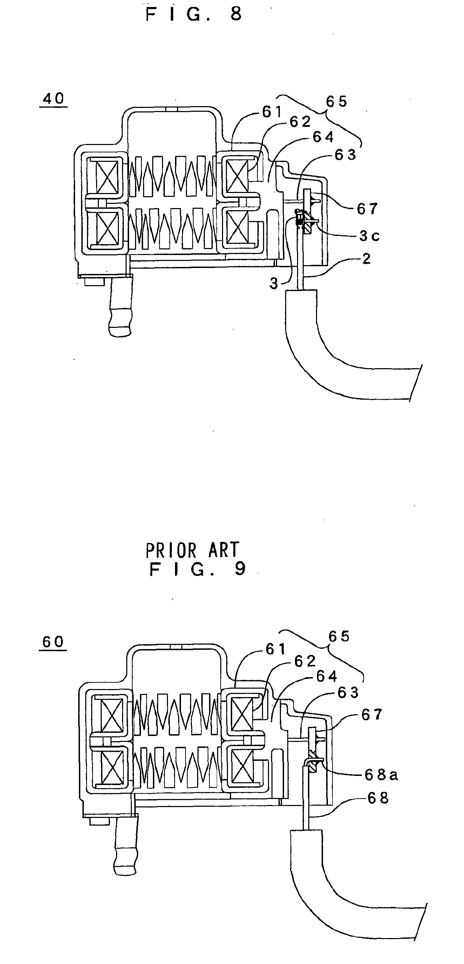

Embodiments of the present invention will be explained hereunder with reference to drawings. In the below explanation also, in the same manner as the above description of the related art, the present invention is adapted to the coil device 65 of a stepping motor for driving an electromagnetic valve show in Fig. 9.

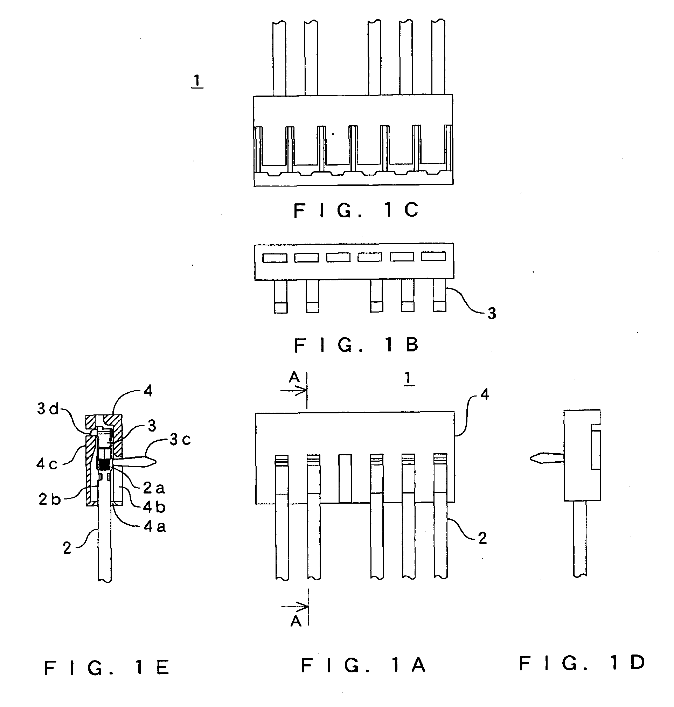

Figures 1A to 1E show a connector constituting a structure for drawing out lead wires from a coil device according to the present invention, and the connector 1 is composed of lead wires 2, crimp terminals 3 attached to tip portions of the lead wires 2, and a housing 4 for retaining the lead wires 2 by the engagement with the crimp terminals 3.

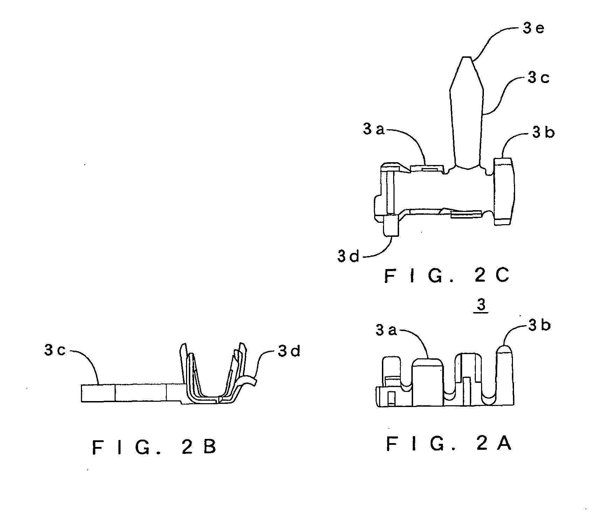

The crimp terminal 3 is made of thin metal, and as shown in Figs. 2A to 2C, the crimp terminal 3 is provided with an exposed conductor portion gripping portion 3a for gripping an exposed conductor portion 2a of the lead wire 2 (shown in Figs. 1A to 1E), a gripping portion 3b for gripping a covered portion 2b of the lead wire 2, a projecting portion (connection terminal) 3c formed to be pin-shaped so as to project in a direction perpendicular to an axial direction of the exposed conductor portion 2a of the lead wire 2, and an engagement projection 3d slightly projecting on a reverse side of the projecting direction of the projecting portion 3c and engaging a tongue-like portion of the housing 4 described below.

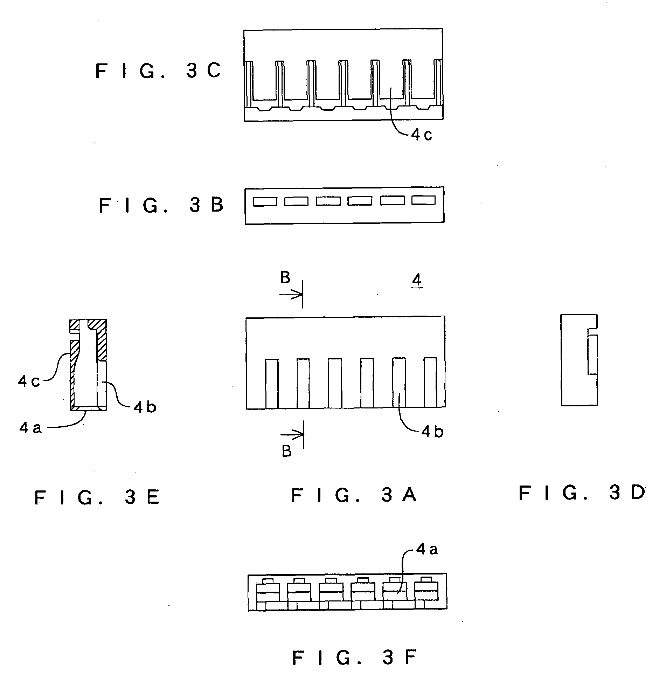

The housing 4 is made of synthetic resin, and as shown in Figs. 3A to 3F, the housing 4 is provided with a plurality of lead wire insertion portions 4a, slits 4b through which the projecting portions 3c of the crimp terminals 3 pass, tongue-like portions 4c for preventing the lead wires 2 from falling out from the housing 4 by the engagement with the engagement projections 3d of the crimp terminals 3 that are attached to the lead wires 2 inserted into the lead wire insertion portions 4a.

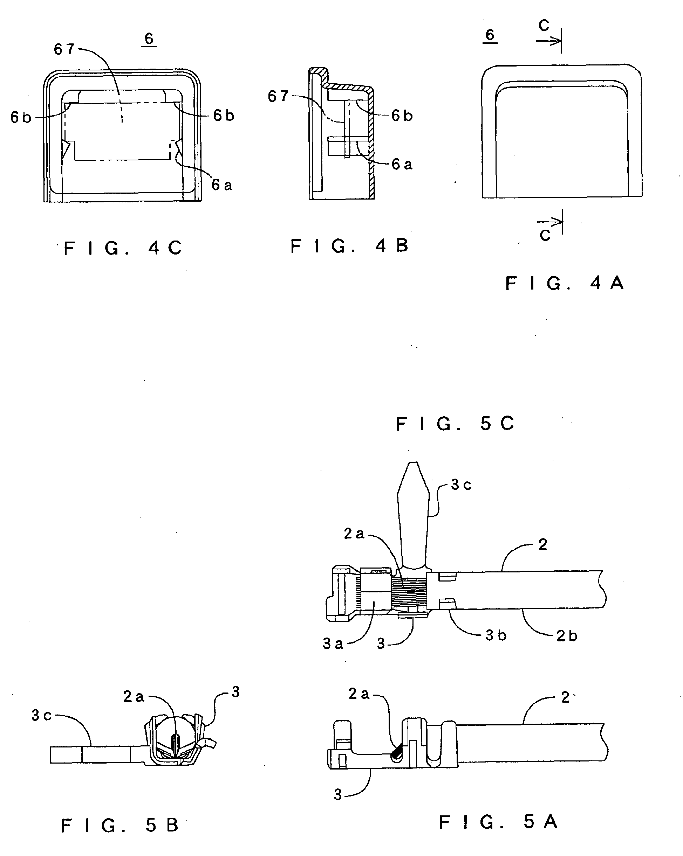

Figures 4A to 4C show a cover 6 for covering both of the connector 1 and the wiring board 67 which are mounted thereafter to a main body of a stepping motor described below, and the cover 6 is made of synthetic resin and is provided with a contact portions 6b contacting the wiring board 67 when the wiring board 67 is accommodated therein, and engagement projections 6a for preventing falling out of the wiring board 67 through the engagement with the wiring board 67.

Next, a method of assembling a stepping motor with the structure for drawing out lead wires of the coil device will be explained.

At first, as illustrated in Figs. 5A to 5C, to the lead wire 2 is attached the crimp terminal 3. In this stage, the exposed conductor portion 2a of the lead wire 2 is gripped with the exposed conductor portion gripping portion 3a, and the covered portion 2b of the lead wire 2 is gripped with the gripping portion 3b.

Next, as shown in Figs. 1A to 1E, the crimp terminals 3 are engaged with the housing 4 to form the connector 1. In this stage, the crimp terminal 3 is inserted into the inside of the housing 4 from the lead wire insertion portion 4a in such a manner that the projecting portion 3c of the crimp terminal 3 is inserted along the slit 4b of the housing 4, and the engagement projection 3d of the crimp terminal 3 is engaged with the tongue-like portion 4c of the housing 4 to prevent the crimp terminal 3 from falling out from the housing 4.

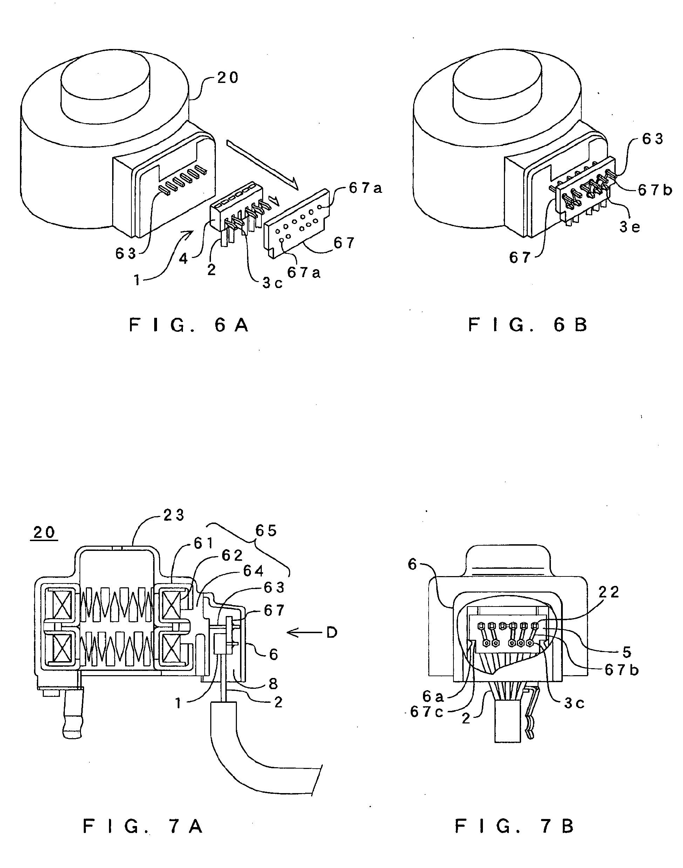

Then, as shown in Figs. 6A and 6B, the projecting portions 3c of the crimp terminals 3 projecting from the housing 4 of the connector 1 are inserted into through holes 67a of the wiring board 67, and further, the terminal pins 63 to which ends of the coils 62 (refer to Figs. 7A and 7B) of a stepping motor 20 are inserted into the through holes 67a of the wiring board 67, and in the state as shown in Fig. 6B, a conductive pattern 67b of the wiring board 67 and free end portions 3e of the projecting portions 3c of the crimp terminals 3 and the terminal pins 63 are conductively connected with each other through soldering or with conductive bonding agent.

Next, as illustrated in Figs. 7A and 7B, the cover 6 is mounted so as to cover the connector 1 and the wiring board 67, and the cover 6 is fixed to a main body 23 of the stepping motor 20. In this case, the engagement projections 6a of the cover 6 and notches 67c of the wiring board 67 are engaged with each other, and the cover 6 is fixed to the main body 23 under the condition that the wiring board 67 is retained in the cover 6. Finally, the inside of the cover 6 is filled with sealing resin to form a resin-sealing portion 8.

In the construction described above, the lead wires 2 are mounted to the housing 4 through the crimp terminals 3 to form the connector 1. After the projecting portions 3c of the crimp terminals 3 retained in the connector 1 are inserted into the through holes 67a of the wiring board 67, the free end portions 3e are conductively connected to the conductive pattern 67b of the wiring board 67 through soldering or with conductive bonding agent, so that no preliminary soldering is applied to the exposed conductor portions 2a of the lead wires 2. As a result, even though a mechanical load is added from outside to the lead wire 2, breakage of the exposed conductor portion 2a of the lead wire 2 can be prevented, and the connection state between the lead 2 and the wiring board 67 can be maintained in stable.

Further, in a state that the stepping motor 20 is assembled, the engagement projections 6a of the cover 6 and the notches 67c of the wiring board 67 are engaged with each other, so that the wiring board 67 can stably be retained in the cover 6, which allows the lead wires 2 also to be stably retained in the cover 6.

In addition, after a plurality of the lead wires 2 is mounted to the housing 4 to constitute the connector 1, the connector 1 and the wiring board 67 are assembled, so that it is unnecessary to mount the lead wires 2 to the wiring board 67 and to solder the lead wires 2 thereto one by one, and then the work for mounting the lead wires 2 to the wiring board 67 is reduced effectively.

Meanwhile, in the above embodiment, as clearly shown in Figs. 6A, 6B, 7A and 7B, the connector 1 is connected to the wiring board 67 from inside, however, it is possible to mount the connector 1 to the wiring board 67 from outside.

In addition, although in the above embodiment, the lead wires 2 are connected to and retained on the wiring board 67 through the connector 1 as an example, without through the connector 1, as illustrated in Fig. 8, the projecting portion 3c of the crimp terminal 3 of the lead wire 2 is directly inserted into the through hole 67a of the wiring board 67 (refer to Figs. 6A and 6B), and the conductive pattern 67b of the wiring board 67 (refer to Figs. 7A and 7B) and the free end portion 3e of the projecting portion 3c of the crimp terminal 3 are conductively connected through soldering or with conductive bonding agent. In the construction of the stepping motor 40 except for the construction that the crimp terminal 3 is directly connected to the wiring board 67,the other construction is substantially the same as that of the stepping motor 20 with the connector 1.

Moreover, also in the construction shown in Fig. 8, since no preliminary soldering is conducted to the exposed conductor portion 2a of the lead wire 2, even when a mechanical load is applied to the lead wire 2 from outside, breakage of the exposed conductor portion 2a of the lead wire 2 may be prevented, and the connection state between the lead 2 and the wiring board 67 can be maintained in stable.

Meanwhile, also in the construction shown in Fig. 8, although the crimp terminal 3 is inserted into the wiring board 67 from inside, the crimp terminal 3 can be inserted into the wiring board 67 from outside.

In each embodiment described above, a distance between land portions of the conductive pattern 67b of the wiring board 67, that is, a pitch between the coil terminal pins 63 and a pitch between the projecting portions 3c of the crimp terminal 3 should be determined so as not to arise a solder bridge between adjacent pins or adjacent terminals at automatic soldering with a solder dipping device (not shown), and approximately 2.5mm pitches are preferable as an example.

## Claims

1. A structure for drawing out lead wires from a coil device (65) having a coil (62) and a plurality of terminal pins (63) extending outward of the coil (62) and to which ends of the coil (62) are connected, **characterized by** comprising:
a wiring board (67) for relay connected at substantially right angles to the terminal pins (63), the wiring board (67) for relay having a side face;
a connector (1) for connecting the lead wires (2) to the wiring board (67) for relay, the connector (1) being positioned at said side face of the wiring board (67) for relay; and
a cover (6) surrounding and separated by a prescribed space from portions where the terminal pins (63) and the wiring board (67) are connected with each other, where the wiring boar (67) and the connector (1) are connected with each other, and where the connector and the terminal pins are connected with each other, the space being filled with a resin;
wherein the lead wires (2) extend in a direction substantially parallel to an axis defined by the coil device, and the coil (62) of the coil device (65) has an outer periphery which is resin molded except for tip portions of the terminal pins (63).

## Patentansprüche

1. Struktur zum Herausführen von Anschlussdrähten aus einer Spulenvorrichtung (65), die eine Spule (62) und mehrere Anschlussstifte (63) aufweist, die sich außerhalb der Spule (62) erstrecken und an die Enden der Spule (62) angeschlossen sind, **dadurch gekennzeichnet, dass** sie Folgendes umfasst:
- eine Relais-Leiterplatte (67), die im Wesentlichen in einem rechten Winkel mit den Anschlussstiften (63) verbunden ist, wobei die Relais-Leiterplatte (67) eine Seitenfläche aufweist;
- einen Verbinder (1) zum Verbinden der Anschlussdrähte (2) mit der Relais-Leiterplatte (67), wobei der Verbinder (1) an der Seitenfläche der Relais-Leiterplatte (67) positioniert ist, und
- eine Abdeckung (6), die Abschnitte umgibt und durch einen vorgeschriebenen Raum von Abschnitten getrennt ist, wo die Anschlussstifte (63) und die Leiterplatte (67) miteinander verbunden sind, wo die Leiterplatte (67) und der Verbinder (1) miteinander verbunden sind und wo der Verbinder und die Anschlussstifte miteinander verbunden sind, wobei der Raum mit einem Harz gefüllt ist;
wobei sich die Anschlussdrähte (2) in einer Richtung erstrecken, die im Wesentlichen parallel zu einer Achse verläuft, die durch die Spulenvorrichtung definiert wird, und die Spule (62) der Spulenvorrichtung (65) einen Außenumfang hat, der mit einem Harz vergossen ist, mit Ausnahme von Spitzenabschnitten der Anschlussstifte (63).

## Revendications

1. Structure pour faire sortir des fils conducteurs à partir d'un dispositif de bobine (65) comportant une bobine (62) et une pluralité de broches de connexion (63) s'étendant à l'extérieur de la bobine (62) et auxquelles des extrémités de la bobine (62) sont reliées,
**caractérisée en ce qu'**elle comprend :
- une carte de câblage (67) pour relais raccordée sensiblement à angle droit aux broches de connexion (63) de la carte de câblage (67) pour relais ayant une face latérale ;
- un connecteur (1) pour raccorder les fils conducteurs (2) à la carte de câblage (67) pour relais, le connecteur (1) étant positionné au niveau de ladite face latérale de la carte de câblage (67) pour relais ; et
- un couvercle (6) entourant et séparé d'un espace prescrit des parties où les broches de connexion (63) et la carte de câblage (67) sont reliées entre elles, où la carte de câblage (67) et le connecteur (1) sont reliés l'un à l'autre, et où le connecteur et les broches de connexion sont reliés l'un aux autres, l'espace étant rempli d'une résine ;
dans laquelle les fils conducteurs (2) s'étendent dans une direction sensiblement parallèle à un axe défini par le dispositif de bobine, et la bobine (62) du dispositif de bobine (65) présente une périphérie extérieure qui est moulée en résine, à l'exception de parties d'extrémité des broches de connexion (63).
